(19) **Europäisches Patentamt / European Patent Office / Office européen des brevets**

(11) **EP 1 671 152 B1**

(12) **FASCICULE DE BREVET EUROPEEN**

(45) Date de publication et mention
de la délivrance du brevet:
**13.05.2009  Bulletin 2009/20**

(51) Int Cl.:
**G01S 13/78** *(2006.01)*

(21) Numéro de dépôt: **04787248.6**

(22) Date de dépôt: **29.09.2004**

(86) Numéro de dépôt international:
**PCT/EP2004/052359**

(87) Numéro de publication internationale:
**WO 2005/038485 (28.04.2005 Gazette 2005/17)**

(54) **PROCEDE ET DISPOSITIF DE FILTRAGE DE REPONSES DANS UN EXTRACTEUR DE RADAR SECONDAIRE**

VERFAHREN UND EINRICHTUNG ZUM FILTERN VON ANTWORTEN IN EINEM SEKUNDÄR-RADAR-EXTRAKTOR

METHOD AND DEVICE FOR FILTERING REPLIES IN A SECONDARY RADAR EXTRACTOR

(84) Etats contractants désignés:
**DE GB IT**

(30) Priorité: **10.10.2003  FR 0311892**

(43) Date de publication de la demande:
**21.06.2006  Bulletin 2006/25**

(73) Titulaire: **Thales
92200 Neuilly Sur Seine (FR)**

(72) Inventeurs:
• **BILLAUD, Philippe,
THALES Intellectual Property
F-94117 Arcueil (FR)**
• **DE VOLDER, Claude,
THALES Intellectual Property
F-94117 Arcueil (FR)**

(74) Mandataire: **Lucas, Laurent Jacques
Marks & Clerk France
Conseils en Propriété Industrielle
Immeuble " Visium "
22, avenue Aristide Briand
94117 Arcueil Cedex (FR)**

(56) Documents cités:
**FR-A- 2 692 996          US-B2- 6 628 225**

• **STEVENS M C: "Secondary Surveillance Radar" SECONDARY SURVEILLANCE RADAR, NORWOOD, ARTECH HOUSE, US, 1988, pages 168-170, XP002154909**

**Description**

La présente invention se situe dans le domaine du filtrage des réponses reçues par un extracteur situé en aval d'un récepteur d'un radar secondaire.

Un radar secondaire permet d'obtenir de véhicules porteurs coopératifs, équipés de transpondeurs (répondeur radar), des informations codées sur l'identité du porteur et d'autres informations codées (altitude, signalisation des pannes radios, détournement, détresse).

Les radars secondaires sont utilisés à la fois dans des applications civiles et militaires, en tant que radar de surveillance (connus sous le nom de "Secondary Surveillance Radar" ou SSR dans la littérature anglo-saxonne) ou radar anti-collision (radar embarqué). La Convention sur l'Aviation Civile Internationale, appelée encore norme OACI (Organisation de l'Aviation Civile Internationale) définit un protocole de communication pour les radars secondaires dans son annexe 10 (Télécommunications Aéronautiques), volume IV (Radar de surveillance et systèmes anti-collision). La norme OACI définit plusieurs modes d'interrogation, tel que les modes A, C et S. Le mode S se distingue des modes A et C en ce qu'il permet une interrogation sélective des avions par l'emploi d'un numéro d'identification propre à chaque avion. Toutefois, les interrogations et les réponses du mode S sont longues par rapport aux interrogations et aux réponses en mode A ou C.

On distingue habituellement, parmi les réponses arrivant sur une antenne radar secondaire, les réponses dites synchrones qui sont les réponses de transpondeurs, situés dans le lobe d'interrogation du radar, aux interrogations de ce radar, et les réponses dites asynchrones, qui sont les réponses des transpondeurs situés dans le lobe d'interrogation du radar à des interrogations provenant d'autres radars.

Le nombre de réponses asynchrones peut s'avérer très important, notamment dans l'application à la surveillance de la navigation aérienne, où la densité d'avions dans un secteur azimutal peut être très forte et le nombre de radars secondaires très élevé. Si rien n'est fait pour éliminer ces réponses asynchrones, le traitement de l'ensemble des réponses (synchrones et asynchrones), en aval du récepteur, peut être saturé.

Il est connu pour éliminer les réponses asynchrones d'utiliser un dispositif appelé défruiteur, permettant au radar secondaire d'éliminer parmi toutes les réponses reçues, celles qui ne sont pas les réponses à ses propres interrogations.

Un défruiteur comporte un filtre synchrone qui vérifie que les réponses reçues au cours des périodes d'écoute suivant chacune des interrogations, sont synchrones avec les interrogations du radar. L'interrogation et la période d'écoute la suivant constituent ce qui est appelé une récurrence. Le filtre synchrone vérifie donc si les réponses sont reçues au même instant T (temps séparant l'interrogation de la réponse) de leur récurrence. Le défruiteur effectue un comptage du nombre P de réponse considérées synchrones par le test de synchronisme. Le défruiteur ne transmet ces réponses à l'extracteur que si le rapport PIN, où N est le nombre de récurrences auquel est appliqué le test de synchronisme, est supérieur à un seuil k déterminé.

La demande de brevet FR 2 692 996 décrit un test de synchronisme dans lequel les réponses sont considérées comme synchrones si elles sont reçues dans des intervalles de temps [T - $\tau$ ; T + $\tau$], $\tau$ désignant un temps de tolérance. Ce temps de tolérance permet de tenir compte notamment de la tolérance sur les temps de réponse des transpondeurs et de l'incertitude introduite par l'échantillonnage numérique.

Si un porteur est animé d'une vitesse radiale par rapport au radar secondaire, le test de synchronisme peut conclure à tort que des réponses de son transpondeur ne sont pas synchrones, le porteur s'étant déplacé d'une distance trop importante entre les deux interrogations. En d'autres termes, l'utilisation d'un tel défruiteur provoque la perte d'un certain nombre de réponses synchrones.

Or, avec l'utilisation du mode S, il n'est plus possible de tolérer la perte de réponses synchrones. En effet, le principe d'interrogation sélective des avions mode S requiert un temps important. Par suite la fréquence d'interrogation dans les autres modes a considérablement diminué, passant par exemple de 450 Hz à 150 Hz. Le nombre de récurrences N auquel peut être appliqué le test de synchronisme a diminué en conséquence. Par conséquent, un tel défruiteur n'est pas satisfaisant vis à vis des porteurs présentant une vitesse radiale non négligeable au sein d'un radar mode S.

De façon analogue, si la vitesse de rotation du radar secondaire est lente, même pour des cibles de vitesse radiale moyenne, le déplacement en distance de celle-ci dans la durée du lobe est important rendant celle-ci asynchrone avec un défruiteur actuel. Or on ne peut tolérer la perte de réponses synchrones sans compromettre les performances du radar.

Un but de l'invention est de proposer un défruiteur plus performant, permettant de tenir compte des porteurs dont la vitesse radiale par rapport au radar secondaire est non négligeable.

A cet effet l'invention concerne notamment un procédé de défruitage des réponses de transpondeurs reçues par un radar secondaire en réponse à des interrogations émises par le radar de façon récurrente, une récurrence étant formée par l'interrogation et les réponses reçues au cours d'une période d'écoute suivant l'interrogation, le procédé de défruitage comprenant un test du synchronisme des réponses reçues dans différentes récurrences, **caractérisé en ce que** une première réponse reçue dans une récurrence i est considérée synchrone avec une seconde réponse reçue dans une autre récurrence j si :

$$\rho_{j} \in \left[ \rho_{i} - V_{max} \times (t_{j} - t_{i}) ; \rho_{i} - V_{min} \times (t_{j} - t_{i}) \right] \text{ lorsque } t_j > t_i ,$$

ou

$$\rho_{j} \in \left[ \rho_{i} - V_{min} \times (t_{j} - t_{i}) ; \rho_{i} - V_{max} \times (t_{j} - t_{i}) \right] \text{ lorsque } t_j < t_i,$$

où :

- $V_{min}$ et $V_{max}$ sont respectivement la vitesse radiale minimale et maximale des transpondeurs par rapport au radar secondaire, positive par convention pour un transpondeur se rapprochant du radar, les vitesses $V_{min}$ et $V_{max}$ pouvant être égales, au moins $V_{min}$ ou $V_{max}$ étant non nulle ;
- $\rho_i$ et $\rho_j$ sont respectivement la distance à laquelle le transpondeur a été détectée dans la récurrence i et dans la récurrence j ;
- $t_i$ et $t_j$ sont respectivement l'instant d'émission de l'interrogation dans la récurrence i et dans la récurrence j.

D'autres caractéristiques et avantages de l'invention apparaîtront à la lecture de la description détaillée suivante présentée à titre d'illustration non limitative et faite en référence aux figures annexées, lesquelles représentent :

- la figure 1, un exemple de récurrences d'un radar secondaire ;
- la figure 2, un exemple de récepteur d'un radar secondaire ;
- la figure 3, un exemple de fenêtre glissante utilisée pour effectuer un test de synchronisme dans un procédé de défruitage de l'art antérieur ;
- les figures 4 à 6, des exemples de fenêtres glissantes utilisées pour effectuer un test de synchronisme dans un procédé de défruitage selon l'invention ;
- les figures 7 à 14, un exemple de mise en oeuvre avantageux de l'invention dans lequel un ensemble de filtres synchrones en parallèle est utilisé ;
- la figure 15, un exemple de diagrammes d'antenne d'un radar secondaire dans un repère puissance - azimut, la puissance étant représentée en ordonnées sur une échelle logarithmique ;
- la figure 16, un exemple de mise en oeuvre avantageux de l'invention, dans lequel la largeur en azimut des fenêtres glissantes, c'est à dire le nombre de récurrences utilisées, est adaptée au bilan de liaison radio.

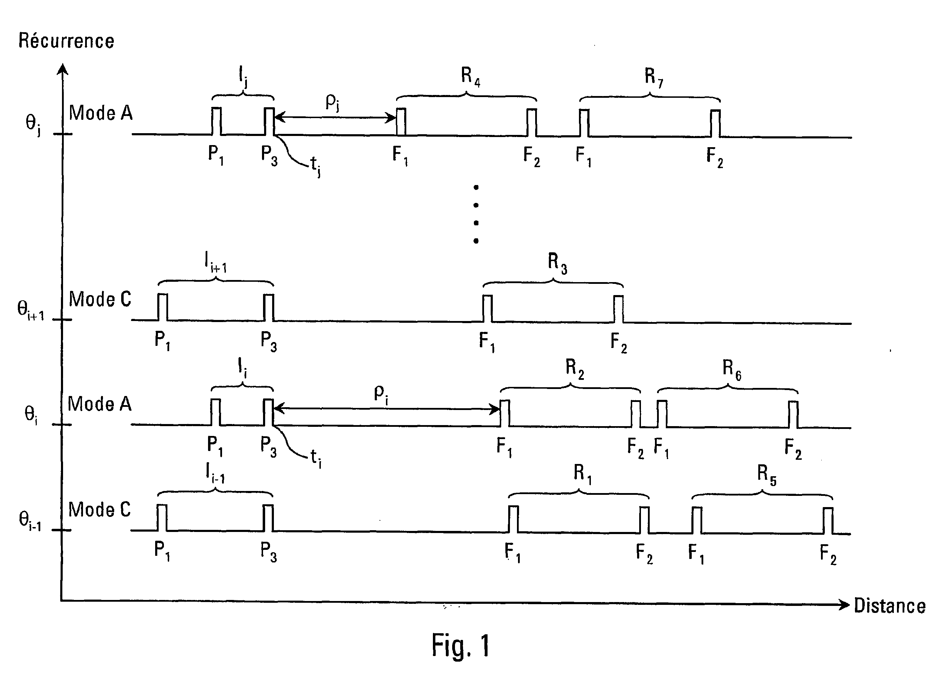

On se réfère maintenant à la figure 1 sur laquelle est représenté un exemple de récurrences d'un radar secondaire.

Chaque récurrence comprend une interrogation émise par le radar secondaire. Le radar peut être un radar à antenne tournante. Chaque interrogation est donc émise dans une direction azimutale notée $\theta_n$, où l'indice n représente le numéro de la récurrence. La direction azimutale est celle définie par la direction du lobe principal de l'antenne lors de l'interrogation. Des interrogations $I_n$ peuvent être émises dans différents modes. On a représenté une succession d'interrogation en mode A et en mode C émises en alternance. L'interrogation peut être formée par deux impulsions $P_1$, $P_3$, séparées d'un intervalle de temps déterminé. Par exemple, les impulsions des interrogations en mode A sont séparées de 8 $\mu$s, et celles en mode C de 21 $\mu$s. Bien entendu, l'invention ne se limite pas à ces modes d'interrogation.

Les récurrences comprennent des réponses. Ces réponses sont émises par des transpondeurs situés dans le lobe de réception de l'antenne, et reçues par le radar secondaire. Des réponses peuvent être synchrones, telles que les réponses $R_1$ à $R_4$, c'est à dire émises par des transpondeurs en réponse aux interrogations $I_n$. Les réponses $R_1$ à $R_4$ dans cet exemple sont émises par un même transpondeur, répondant à la fois aux interrogations mode A et mode C. D'autres réponses peuvent être asynchrones, telles que les réponses $R_5$ à $R_7$, c'est à dire émises par des transpondeurs en réponse à des interrogations d'un ou plusieurs autres radars secondaires.

Une réponse classique (synchrone ou asynchrone) comprend deux impulsions d'encadrement, notées $F_1$ et $F_2$, séparées d'un intervalle de temps déterminé. Cet intervalle peut être de 20,3 $\mu$s pour les réponses aux interrogations mode A et C. Entre les deux impulsions d'encadrement, les réponses comprennent en outre des impulsions (non représentées) codant pour des données.

Une période de récurrence est définie par le temps séparant deux impulsions $P_3$ de deux interrogations suc-

cessives. Cette période est de l'ordre de 2 à 20 ms. On peut réaliser une vobulation, avec par exemple 128 paliers de vobulation, c'est à dire utiliser une période de récurrence variable. Ceci permet d'éliminer plus efficacement les réponses asynchrones issues d'autres radars ayant une fréquence d'interrogation proche de celle du radar équipé du défruiteur.

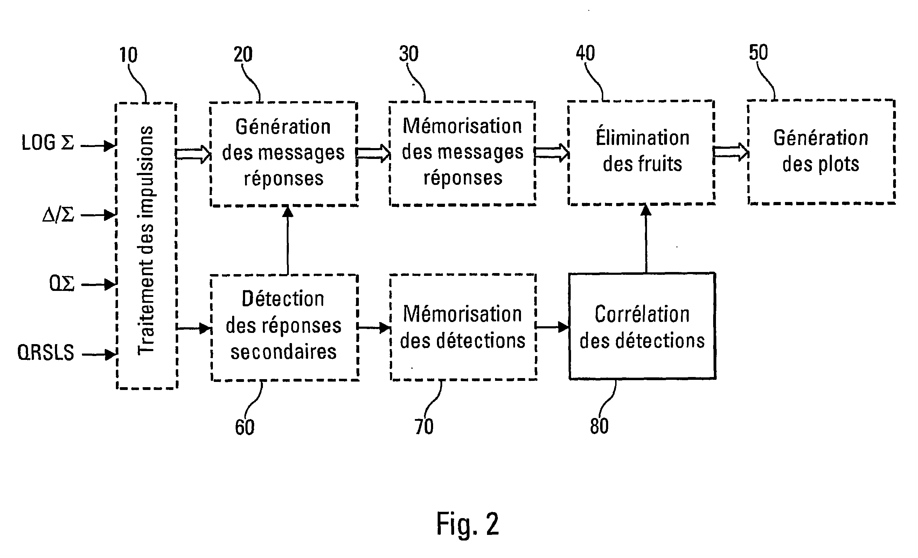

La figure 2 représente un exemple de récepteur d'un radar secondaire. Ce récepteur comprend un dispositif de traitement des impulsions 10 qui reçoit en entrée des signaux (vidéo radar) élaborés de façon connue en elle-même, échantillonnés à une fréquence par exemple de 20 MHz.

L'un de ces signaux représente une information dite de façon conventionnelle Log sigma. Ce signal est représentatif de la puissance du signal reçu après qu'il a été amplifié de façon connue par un amplificateur logarithmique. Il est converti en grandeur numérique par un convertisseur analogique numérique (non représenté) avant son introduction dans le dispositif 10. Le dispositif 10 reçoit également un signal dit de façon conventionnelle Q sigma, qui est la recopie du signal Log sigma diminué de six décibels. Ce signal Q sigma permet d'obtenir le point milieu de la valeur de la puissance de l'impulsion. Le dispositif 10 reçoit également un signal QRSLS dit de réception sur lobes secondaires.

Le dispositif 10 permet notamment d'élaborer la position des impulsions. Cette élaboration peut être faite en prenant en compte la détection de fronts montants réels d'une part, et d'autre part en générant des fronts montants artificiels lorsqu'une impulsion réelle a une durée supérieure à la durée normale d'une impulsion. Cette génération peut être faite à partir du front arrière de l'impulsion réelle. Si un changement de niveau de puissance est détecté, cette génération peut aussi être faite à partir des moments de ce changement de puissance. La durée normale d'une impulsion peut être connue de la normalisation internationale, telle que la Convention sur l'Aviation Civile Internationale, appelée encore norme OACI (Organisation de l'Aviation Civile Internationale), annexe 10 (Télécommunications Aéronautiques), volume IV (Radar de surveillance et systèmes anti-collision).

Le récepteur comprend en outre un dispositif de détection de réponses secondaires 60, placé en aval du dispositif 10. Le dispositif de détection 60 est appelé aussi détecteur BPD (acronyme issu de l'expression anglo-saxonne "Bracket Pair Detection") ou détecteur de réponses secondaires. Le circuit 60 permet de détecter la coïncidence d'impulsions séparées de l'intervalle déterminé, c'est à dire 20,3 µs dans cet exemple. Il comprend essentiellement une ligne à retard de 20,3 µs dont l'entrée reçoit le signal vidéo radar échantillonné. Avantageusement, on ajoute un temps de tolérance (par exemple de 0,25 µs) à cette durée de 20,3 µs. Ce temps de tolérance permet de tenir compte du temps de réponse des transpondeurs et de l'incertitude introduite par le circuit de détection en amont. L'entrée et la sortie de la ligne à retard sont reliées à une porte logique "ET", dont la sortie permet de détecter la coïncidence d'impulsions d'encadrement, et donc d'une réponse.

Le récepteur comprend en outre un dispositif 20 qui à partir des informations du dispositif 10 élabore les messages contenus dans chacune des réponses reçues.

Avant de transmettre ces réponses aux dispositifs de traitement ou de visualisation, il convient de s'assurer que les réponses détectées ne sont pas des réponses asynchrones. Cette fonction est réalisée par un défruiteur. Un défruiteur comporte des dispositifs 30, 40, 70, 80. Les dispositifs 30 et 70 sont des mémoires contenant respectivement des messages et des détections issues des dispositifs 20 et 60.

Le dispositif 80 est un corrélateur pour réaliser une corrélation entre une détection courante et d'autres détections, qui sont mémorisées dans la mémoire 70. Cette corrélation revient à compter dans des récurrences déterminées le nombre de réponses considérées comme synchrones avec une réponse courante. Le choix des récurrences peut être effectué de la manière décrite dans le document FR 2 692 996 (mono-mode, multi-mode). Pour déterminer si deux réponses sont synchrones, on effectue un test appelé test de synchronisme. L'implémentation de ce test revient à déterminer une fenêtre en fonction de la position de la réponse courante (récurrence, case distance) dans la mémoire 70. La corrélation étant effectuée pour chaque réponse détectée, on utilise une fenêtre glissante.

Le résultat de la corrélation réalisée alimente un dispositif d'élimination des fruits 40. Ce dispositif reçoit des messages réponses en provenance de la mémoire 30. Cette mémoire 30 a pour fonction de conserver les messages reçus pendant le temps nécessaire à l'exécution de la corrélation. Le dispositif 40 transmet les messages des réponses corrélées à un dispositif de génération de plots 50. Par contre, il ne transmet pas le message d'une réponse considérée comme asynchrone car n'ayant pas été corrélée.

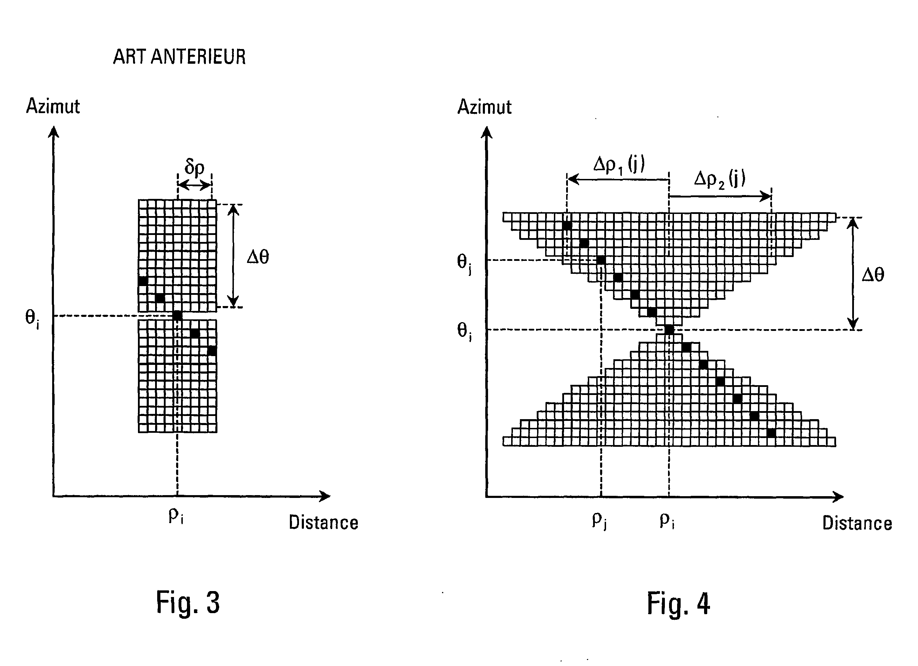

On se réfère maintenant à la figure 3 sur laquelle est représenté un exemple de fenêtre glissante utilisée pour effectuer un test de synchronisme dans un procédé de défruitage de l'art antérieur. On trouvera la description d'un tel procédé dans le brevet FR 2 692 996. La sortie du détecteur BPD peut être reliée à une mémoire matricielle dont les cases mémoires sont représentées dans un repère en azimut - distance. La mémoire matricielle permet de mémoriser les détections de réponses (synchrones ou asynchrones).

Les cases mémoires sont ordonnées en distance et en récurrence. Chaque colonne de la mémoire matricielle représente une case distance. Chaque colonne correspond à une distance aller/retour, parcourue par une onde à la vitesse de la lumière, notée c, pendant 50 nano-secondes (si la fréquence de traitement du signal choisie est de 20Mhz). Pour une portée de 265 miles nautiques il y a 65536 colonnes. Chaque ligne de la mémoire représente une récurrence. Chaque ligne correspond à l'azimut du lobe principal de l'antenne lors de l'interrogation.

Lorsqu'une case mémoire de la ligne n°i est renseignée, ceci indique qu'une réponse a été détectée par le détecteur BPD lors de la récurrence n°i. La ligne de la case mémoire permet de déterminer l'azimut $\theta_i$ du radar lors de l'interrogation. La colonne de la case mémoire permet de déterminer la distance $\rho_j$, exprimée en nombre de cases mémoires, entre le transpondeur et le radar.

Lorsqu'une réponse est détectée dans une récurrence, on cherche si cette réponse est corrélée à d'autres réponses dans d'autres récurrences. En d'autres termes, on effectue un test de synchronisme entre une détection sous analyse et d'autres détections réalisées dans d'autres récurrences. Les récurrences prises en considération pour effectuer le test de synchronisme peuvent être celles qui précèdent et / ou celles qui suivent la détection sous analyse. Dans cet exemple, la réponse sous analyse est référencée par l'azimut $\theta_i$ et la distance $\rho_i$.

On prend en considération les N récurrences qui précèdent et les N récurrences qui suivent la réponse sous analyse. Ces N récurrences correspondent à une extension azimutale $\Delta\theta$ égale à la largeur du lobe d'antenne utilisée par le radar. Par exemple, on peut utiliser une valeur de N égale à treize.

Dans ces autres récurrences, les réponses sont considérées comme synchrones si elles sont reçues dans des intervalles de temps $[T - \tau\; ; T + \tau]$, $\tau$ désignant un temps de tolérance. La tolérance en temps $\tau$ correspond à une tolérance en distance $\delta\rho$ avec :

$$\delta\rho = \frac{c \times \tau}{2}$$

Dans cet exemple, la tolérance $\delta\rho$ est de quatre cases distance. Ainsi, on prend en considération non seulement la case distance de la réponse sous analyse, mais aussi les quatre cases distances qui la précèdent et qui la suivent. Toutefois, ces quatre cases distances ne sont pas suffisantes pour tenir compte des transpondeurs animés d'une vitesse radiale non négligeable.

On se réfère à la figure 1. On considère un transpondeur en rapprochement. De récurrence en récurrence, la distance entre le transpondeur et le radar diminue. Ainsi à la récurrence n°i la distance est $\rho_i$. A la récurrence n°j, la distance a diminué à $\rho_j$, l'écart entre $\rho_i$ et $\rho_j$ étant supérieur à quatre cases distances.

Comme illustré sur la figure 3, le transpondeur en rapprochement sort de la fenêtre glissante. Les détections aux récurrences suivantes ne sont pas prises en considération. Il peut en résulter, si le nombre de détections est trop faible, qu'un tel transpondeur ne soit pas détecté. En d'autres termes, les réponses correspondant à ce transpondeur en rapprochement, considérées à tort comme asynchrones, seront éliminées par un procédé de défruitage conventionnel.

On se réfère maintenant aux figures 4 à 6. L'invention permet de tenir compte de toutes les détections d'un transpondeur mobile. La vitesse radiale du transpondeur, supposée constante, est encadrée par deux vitesses radiales $V_{min}$ et $V_{max}$. $V_{min}$ représente la vitesse radiale minimale, $V_{max}$ la vitesse radiale maximale. Les vitesses $V_{min}$ et $V_{max}$ sont des paramètres du procédé, au moins l'une de ces vitesses étant non nulle. Par convention, la vitesse radiale est prise positive pour un transpondeur en rapprochement et négative pour un transpondeur s'éloignant. Ainsi, un transpondeur qui s'éloigne a une vitesse radiale plus petite qu'un transpondeur en rapprochement.

Lorsqu'une réponse est détectée dans une récurrence, on cherche si cette réponse est corrélée à d'autres réponses dans d'autres récurrences en effectuant un test de synchronisme du type de celui décrit précédemment. Selon l'invention, lorsqu'on effectue le test de synchronise, on tient compte des détections des transpondeurs dont les vitesses radiales sont comprises entre les vitesses $V_{min}$ et $V_{max}$.

Lorsque qu'une réponse à la récurrence n°i est détectée, on considère comme synchrones à la récurrence n°j les réponses pour lesquelles :

$$\rho_j \in \left[\rho_i - V_{max} \times (t_j - t_i)\; ; \rho_i - V_{min} \times (t_j - t_i)\right] \text{ lorsque } t_j > t_i,$$

ou

$$\rho_j \in \left[\rho_i - V_{min} \times (t_j - t_i)\; ; \rho_i - V_{max} \times (t_j - t_i)\right] \text{ lorsque } t_j < t_i,$$

où $t_i$ et $t_j$ sont respectivement l'instant d'émission de l'interrogation dans la récurrence i et dans la récurrence j.

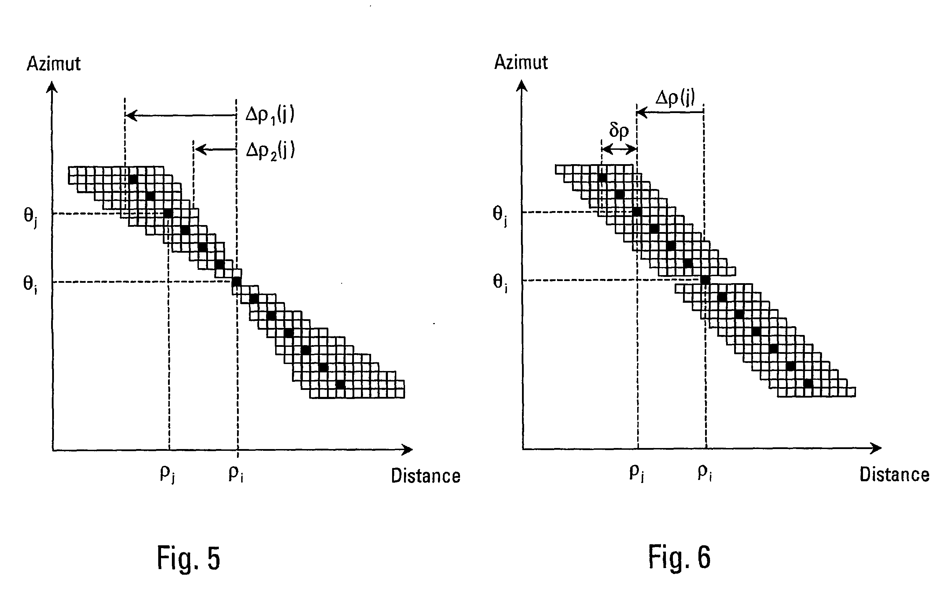

Les vitesses $V_{min}$ et $V_{max}$ peuvent être différentes ou égales. Dans les exemples illustrés figures 4 et 5, on utilise des vitesses différentes. A la récurrence j, le test de synchronise revient à considérer comme synchrones les détections dans les cases distances allant de $\rho_i + \Delta\rho_1(j)$ à $\rho_i + \Delta\rho_2(j)$, où :

$$\Delta\rho_1(j) = -V_{max} \times (t_j - t_i) \text{ et } \Delta\rho_2(j) = -V_{min} \times (t_j - t_i) \text{ lorsque } t_j > t_i$$

ou

$$\Delta\rho_1(j) = -V_{max} \times (t_j - t_i) \text{ et } \Delta\rho_2(j) = -V_{min} \times (t_j - t_i) \text{ lorsque } t_j > t_i$$

Dans l'exemple illustré figure 4, on utilise des paramètres ayant même valeur absolue. En d'autres termes, les transpondeurs sont supposés avoir une vitesse radiale limitée en valeur absolue à une vitesse $V_r$. On utilise donc les paramètres $V_{min} = -V_r$ et $V_{max} = +V_r$. On obtient une fenêtre glissante ayant une forme de sablier.

Dans l'exemple illustré figure 5, on utilise des paramètres ayant des valeurs proches. En d'autres termes, on encadre la vitesse radiale entre deux valeurs proches.

Dans l'exemple illustré figure 6, on utilise des paramètres ayant même valeur. Le test de synchronise revient à rechercher les transpondeurs détectés à une distance déterminée $\rho_j = \rho_i + \Delta\rho(j)$ avec :

$$\Delta\rho(j) = -V_{min} \times (t_j - t_i) = -V_{max} \times (t_j - t_i)$$

Selon un mode de réalisation avantageux, on utilise une tolérance en distance $\delta\rho$ pour effectuer le test de synchronise. En d'autres termes, on considère comme synchrones à la récurrence n°j des réponses pour lesquelles :

$$\rho_j \in \left\lfloor \rho_i - V_{max} \times (t_j - t_i) - \delta\rho \; ; \; \rho_i - V_{min} \times (t_j - t_i) + \delta\rho \right\rfloor \text{ lorsque } t_j > t_i \, ,$$

ou

$$\rho_j \in \left\lfloor \rho_i - V_{min} \times (t_j - t_i) - \delta\rho \; ; \; \rho_i - V_{max} \times (t_j - t_i) + \delta\rho \right\rfloor \text{ lorsque } t_j < t_i,$$

Dans l'exemple illustré figure 6, on utilise une tolérance fixe de quatre cases distances. On obtient une fenêtre glissante en forme de parallélogramme. Ce mode de réalisation correspond à une seule vitesse radiale, c'est à dire à une valeur de $V_{min}$ égale à $V_{max}$. Ce mode de réalisation est optimal lorsque la vitesse de l'avion est connue.

Les modes de réalisation décrits en relation avec les figures 5 et 6 sont utiles lorsqu'on utilise plusieurs filtres synchrones (c'est à dire des filtres de réponses secondaires) en parallèle. Selon un mode de réalisation avantageux de l'invention, les filtres synchrones sont répartis en vitesse de manière à détecter le synchronisme de réponses de transpondeurs animés de vitesses radiales comprises dans des plages contiguës. Selon autre un mode de réalisation avantageux, les plages de vitesses radiales sont équiréparties.

L'efficacité d'un défruiteur, c'est à dire le taux de suppression des réponses asynchrones, est d'autant plus faible que la surface de corrélation retenue est grande et que le taux de réponses asynchrones est élevé. L'invention permet, dans un environnement radar très pollué par des réponses asynchrones, d'obtenir une meilleure efficacité grâce à l'utilisation d'une surface de corrélation adaptée à la cible utile.

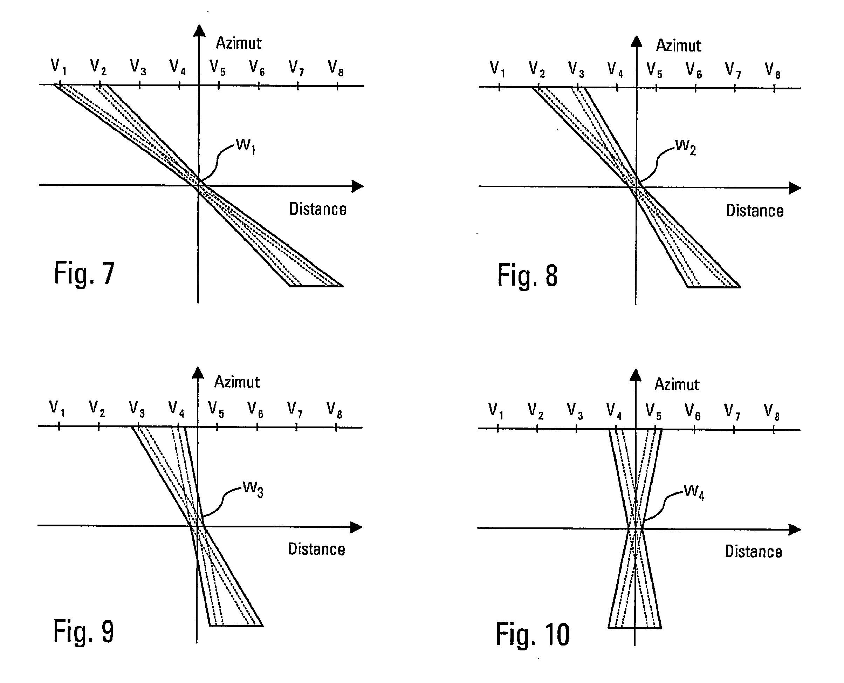

On se réfère maintenant aux figures 7 à 13 sur lesquelles est représenté un ensemble de fenêtres glissantes $W_1$, $W_2$, ..., $W_7$ selon l'invention. Les fenêtres glissantes sont représentées dans des repères azimut - distance centrés sur la réponse sous analyse. Chaque fenêtre glissante est utilisée pour réaliser un filtre synchrone différent, auquel correspond une plage de vitesses radiales différente. Les plages de vitesses radiales sont représentées sur un axe parallèle à l'axe des distance (axe des abscisses). Les extrémités de ces plages sont notées $V_1$, $V_2$, ..., $V_8$. Ainsi, la fenêtre glissante $W_1$ correspondant à la plage de vitesses radiales $[V_1 ; V_2]$. La fenêtre glissante suivante W2 correspond à une plage de vitesses radiales contiguës $[V_2 ; V_3]$... On réalise ainsi un ensemble de filtres synchrones dont les plages de vitesses radiales correspondantes sont contiguës.

De manière avantageuse, chaque vitesse radiale $V_1$, $V_2$, .... $V_8$ est séparée de celle qui précède d'un écart de vitesse fixe. En d'autres termes, les plages de vitesses sont équiréparties.

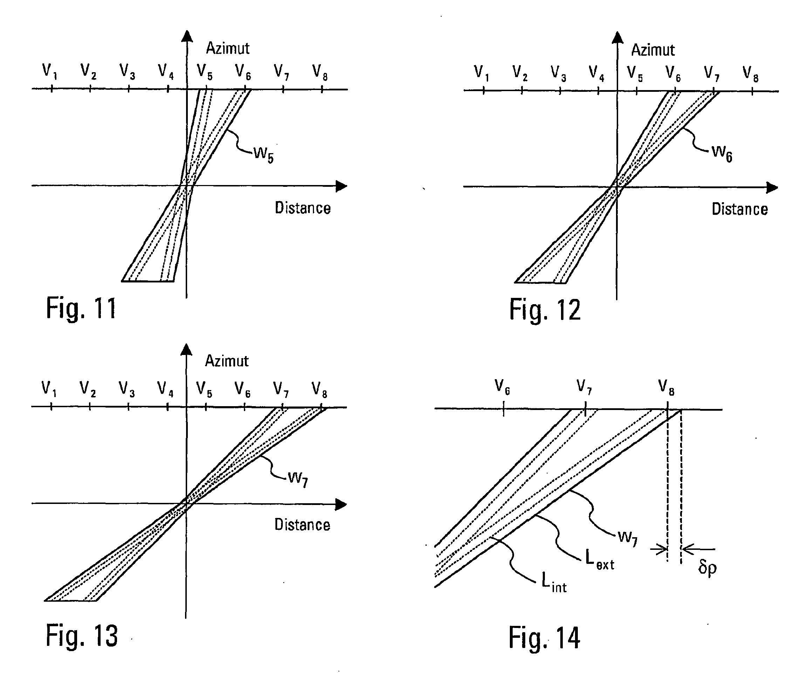

On se réfère à la figure 14, une vue de détail de la fenêtre glissante $W_7$ représentée dans son ensemble à la figure 13. Dans cet exemple de mise en oeuvre, on utilise une tolérance en distance $\delta\rho$ pour effectuer le test de synchronise. Ainsi, la fenêtre glissante $W_7$ comporte une limite interne $L_{int}$ correspondant exactement à la vitesse radiale $V_8$, et une limite externe $L_{ext}$ correspondant à cette même vitesse radiale en tenant compte d'une tolérance en distance $\delta\rho$. Cette tolérance additionnelle a pour but de prendre en compte les jitters en temps de réponse du transpondeur ainsi que les jitters introduits par les traitements du récepteur tels que ceux dus à la fréquence d'échantillonnage du récepteur.

Ainsi, les fenêtres glissantes $W_1$, $W_2$, ..., $W_7$ peuvent être définies par:

$$\rho_j \in \left[ \rho_i - V_{max} \times (t_j - t_i) - \delta\rho \; ; \; \rho_i - V_{min} \times (t_j - t_i) + \delta\rho \right] \text{ lorsque } t_j > t_i \;,$$

ou

$$\rho_j \in \left[ \rho_i - V_{min} \times (t_j - t_i) - \delta\rho \; ; \; \rho_i - V_{max} \times (t_j - t_i) + \delta\rho \right] \text{ lorsque } t_j < t_i,$$

avec

- pour $W_1$ : $V_{min} = V_1$ et $V_{max} = V_2$ ;
- pour $W_2$ : $V_{min} = V_2$ et $V_{max} = V_3$ ;
  ...
- pour $W_7$ : $V_{min} = V_7$ et $V_{max} = V_8$.

Ainsi la plage de corrélation est à chaque fois adaptée à la vitesse de la cible et ce d'autant plus que $V_{i+1} - V_i$ est faible. Une réponse sera déclarée synchrone si le seuil de corrélation est dépassé pour l'un des filtres du banc.

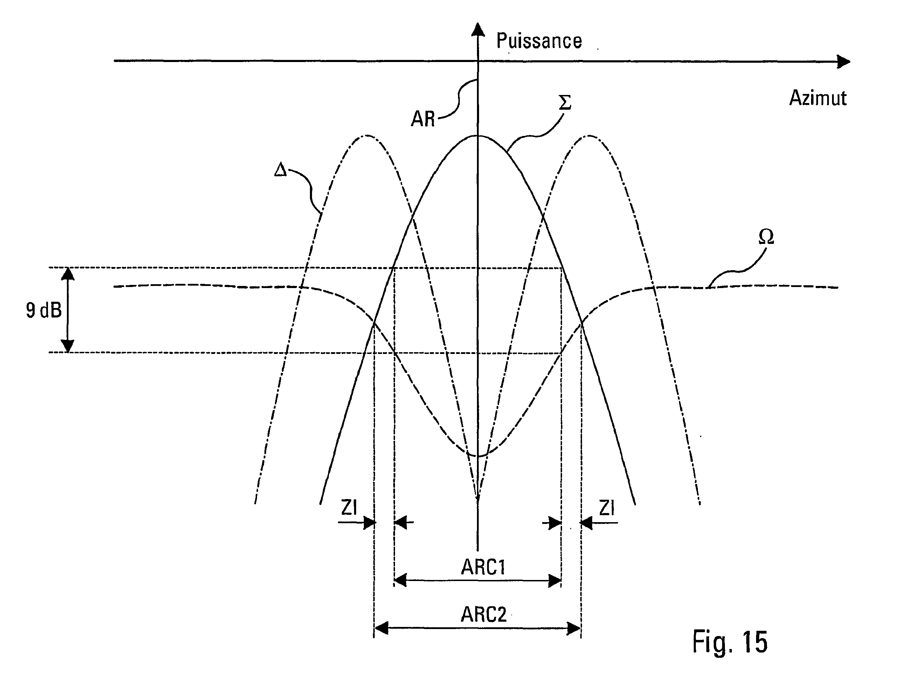

On se réfère maintenant à la figure 15 sur laquelle est représenté un exemple de diagrammes d'antenne d'un radar secondaire dans un repère puissance - azimut, la puissance étant représentée en ordonnées sur une échelle logarithmique. Le radar émet et reçoit des ondes radio en utilisant trois diagrammes d'antenne différents, appelés de façon conventionnelle somme $\Sigma$, différence $\Delta$ et contrôle $\Omega$. Le diagramme d'antenne somme est centré par rapport à l'axe radioélectrique AR de l'antenne. Le diagramme d'antenne différence comporte deux lobes secondaires symétriques par rapport à l'axe AR. Le diagramme d'antenne contrôle présente quant à lui un minimum centré sur l'axe radioélectrique AR et un plateau en dehors.

Les impulsions $(P_1, P_3)$ formant les interrogations sont émises en utilisant le diagramme somme. Dans certaines applications, des impulsions peuvent aussi être émises en utilisant le diagramme différence. L'utilisation du diagramme différence à l'émission est optionnelle. Lors de chaque interrogation, une impulsion de contrôle $(P_2)$, définie par la norme OACI, est émise en utilisant le diagramme contrôle.

La norme OACI impose aux transpondeurs de ne répondre aux interrogations que dans un arc prédéterminé du diagramme d'antenne du radar secondaire. Selon la norme, lorsqu'un transpondeur reçoit une impulsion $(P_1)$, issue la voie somme, dont la puissance est supérieure de 9 dB à celle de l'impulsion issue la voie contrôle $(P_2)$, le transpondeur doit répondre à l'interrogation. Cette condition correspond à un arc d'azimut ARC1 dans lequel la norme garantie les réponses des transpondeurs. Par contre si la puissance de l'impulsion $P_1$ est inférieure à celle de l'impulsion $P_2$, le transpondeur ne doit pas répondre à l'interrogation. Il existe ainsi une zone d'incertitude ZI, lorsque la puissance de l'impulsion reçue sur la voie somme est dans un intervalle allant de 0 à 9 dB au-dessus de la puissance de l'impulsion de contrôle. Dans cette zone d'incertitude, le transpondeur peut répondre ou non à l'interrogation. En ajoutant ces zones d'incertitudes ZI à l'arc d'azimut ARC1 précédemment défini, on obtient un arc d'azimut ARC2 maximum au-delà duquel aucun transpondeur ne doit répondre.

Selon un mode de réalisation avantageux, le test de synchronisme est effectué en utilisant uniquement les récurrences comprises dans l'arc ARC2 par rapport à la réponse sous analyse. Ceci permet d'améliorer la probabilité de détecter les réponses synchrones de transpondeur ayant un faible taux de réponse aux interrogations du radar mais répondant sur un arc maximal. En d'autres termes, la grandeur ARC2 permet de définir le nombre N de récurrences qui précèdent ou suivent la réponse sous analyse.

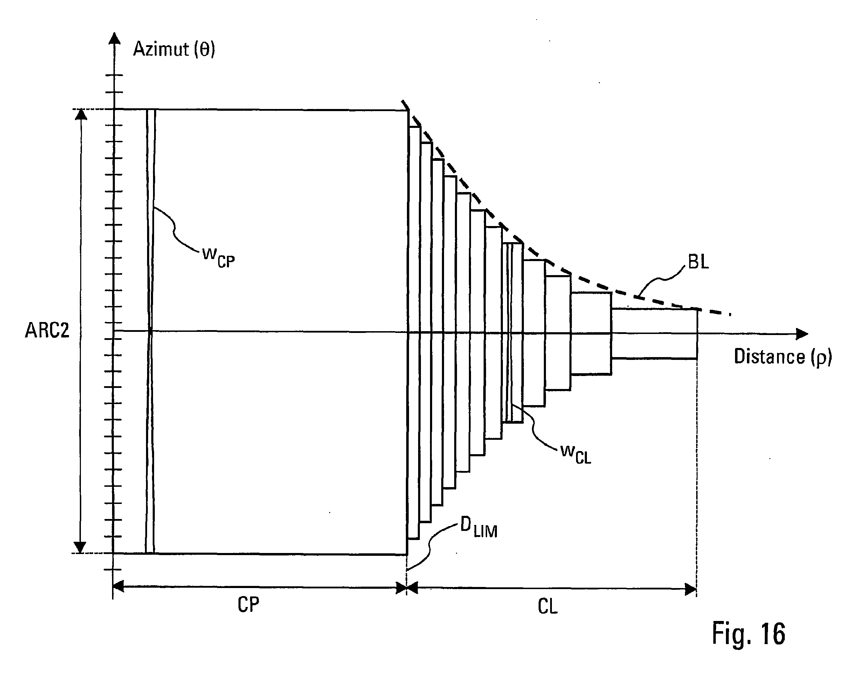

On se réfère maintenant à la figure 16 sur laquelle est représenté un exemple de mise en oeuvre avantageux de l'invention, dans lequel la largeur en azimut des fenêtres glissantes, c'est à dire le nombre de récurrences utilisées, est adaptée au bilan de liaison radio. A partir d'une distance $D_{LIM}$ dépendant des caractéristiques du radar secondaire et des transpondeurs, la largeur du lobe n'est plus limitée par la norme OACI mais par le bilan de liaison. Les transpondeurs situés en deçà de cette distance sont dits en champ proche CP. Les transpondeurs situés au delà de cette distance sont dits en champ lointain CL. En champ proche CP, l'arc d'azimut dans lequel les transpondeurs peuvent répondre est limité par la norme (voir la figure 14). En champ lointain CL, c'est la portée du système radar secondaire - transpondeur, c'est à dire le bilan de liaison BL, qui limite la largeur du lobe. En champ lointain, aux limites du lobe efficace du radar secondaire, soit le transpondeur ne parvient pas à recevoir les interrogations provenant du radar secondaire, soit le radar secondaire ne parvient pas à recevoir les réponses provenant des transpondeurs.

Selon le mode de réalisation avantageux représenté à la figure 16, l'étendue en azimut des fenêtres glissantes est adapté au bilan de liaison. En d'autres termes, on effectue le test de synchronisme en champ lointain uniquement sur les récurrences pour lesquelles l'azimut d'interrogation est compris dans le lobe efficace d'interrogation du radar secondaire. Cette limitation de la zone de corrélation à l'arc de réponse du transpondeur permet de ne pas altérer la probabilité de détection des réponses synchrones mais aussi d'augmenter l'efficacité du défruiteur selon l'invention.

Sur cette figure, l'axe des ordonnées représente l'azimut d'interrogation, et l'axe des abscisses la distance radiale des transpondeurs. L'axe des ordonnées est gradué en récurrence. Un exemple de fenêtre glissante $W_{CP}$ est représenté en champ proche CP. Cette fenêtre glissante inclue les treize récurrences qui suivent et qui précèdent la réponse sous analyse. Un autre exemple de fenêtre glissante $W_{CL}$ est répresenté en champ lointain CL. Cette fenêtre glissante est limitée aux cinq récurrences qui suivent et qui précèdent la réponse sous analyse. L'échelle sur cette figure n'est pas respectée, la largeur en distance des fenêtres glissantes étant exagérée pour les rendre visibles.

Selon un autre mode de réalisation avantageux (non représenté), on peut aussi limiter la largeur des fenêtres glissantes en tenant compte non seulement l'azimut, mais aussi l'élévation des transpondeurs par rapport au radar secondaire. En effet, l'élévation des transpondeurs intervient aussi (dans une moindre mesure) dans le bilan de liaison selon le diagramme en élévation de l'antenne du radar.

Bien entendu, l'invention ne se limite pas à ces exemples de réalisation. Les fenêtres glissantes ont été représentées dans un repère azimut - distance en supposant que le radar secondaire est un radar à antenne tournant à une vitesse constante. Toutefois, l'invention s'applique aussi aux radars à antenne fixe. Dans ce cas, on peut remplacer l'axe des ordonnées (azimut lors de l'interrogation) par un axe de temps, le temps sur cet axe étant l'instant de l'interrogation.

**Revendications**

1. Procédé de défruitage des réponses de transpondeurs reçues par un radar secondaire en réponse à des interrogations émises par le radar de façon récurrente, une récurrence étant formée par l'interrogation et les réponses reçues au cours d'une période d'écoute suivant l'interrogation, le procédé de défruitage comprenant un test du synchronisme des réponses reçues dans différentes récurrences, **caractérisé en ce que** une première réponse reçue dans une récurrence i est considérée synchrone avec une seconde réponse reçue dans une autre récurrence j si :

$$\rho_j \in \left[\rho_i - V_{max} \times (t_j - t_i); \rho_i - V_{min} \times (t_j - t_i)\right] \text{ lorsque } t_j > t_i,$$

ou

$$\rho_j \in \left[\rho_i - V_{min} \times (t_j - t_i); \rho_i - V_{max} \times (t_j - t_i)\right] \text{ lorsque } t_j < t_i,$$

où :

- $V_{min}$ et $V_{max}$ sont respectivement la vitesse radiale minimale et maximale des transpondeurs par rapport au radar secondaire, positive par convention pour un transpondeur se rapprochant du radar, les vitesses $V_{min}$ et $V_{max}$ pouvant être égales, au moins $V_{min}$ ou $V_{max}$ étant non nulle ;
- $\rho_i$ et $\rho_j$ sont respectivement la distance à laquelle le transpondeur a été détectée dans la récurrence i et dans la récurrence j ;
- $t_i$ et $t_j$ sont respectivement l'instant d'émission de l'interrogation dans la récurrence i et dans la récurrence j.

**2.** Procédé selon la revendication 1 dans lequel on utilise une tolérance en distance pour effectuer le test de synchronisme.

**3.** Procédé de défruitage dans lequel on applique en parallèle des procédés de défruitage selon la revendication 1 sur des plages de vitesses radiales [Vmin ; Vmax] différentes.

**4.** Procédé selon la revendication 3 dans lequel les plages de vitesses radiales sont contiguës.

**5.** Procédé selon la revendication 3 dans lequel les plages de vitesses radiales sont équiréparties.

**6.** Procédé selon la revendication 1 dans lequel on effectue le test de synchronisme en champ lointain uniquement sur les récurrences pour lesquelles l'azimut d'interrogation est compris dans le lobe efficace d'interrogation du radar secondaire.

**7.** Défruiteur pour extracteur de réponses de transpondeur comportant un dispositif de corrélation configuré pour mettre en oeuvre le procédé selon la revendication 1.

**8.** Radar secondaire comportant un défruiteur selon la revendication 7.

**Claims**

**1.** Method for defruiting the transponder responses received by a secondary radar in response to interrogations emitted by the radar in a recurrent manner, a recurrence being formed by the interrogation and the responses received in the course of a listening period following the interrogation, the defruiting method comprising a test of the synchronism of the responses received in various recurrences, **characterized in that** a first response received in a recurrence i is considered synchronous with a second response received in another recurrence j if:

$$\rho_j \in \left[ \rho_i - V_{max} \times \left( t_j - t_i \right); \rho_i - V_{min} \times \left( t_j - t_i \right) \right] \text{ when } \mathtt{t_j > t_i} ,$$

or

$$\rho_j \in \left[ \rho_i - V_{min} \times \left( t_j - t_i \right); \rho_i - V_{max} \times \left( t_j - t_i \right) \right] \text{ when } \mathtt{t_j < t_i},$$

where:

- $V_{min}$ and $V_{max}$ are respectively the minimum and maximum radial speed of the transponders with respect to the secondary radar, positive by convention for a transponder approaching the radar, the speeds $V_{min}$ and $V_{max}$ possibly being equal, at least $V_{min}$ or $V_{max}$ being nonzero;
- $\rho_i$ and $\rho_j$ are respectively the distance at which the transponder has been detected in recurrence i and in recurrence j;
- $t_i$ and $t_j$ are respectively the instant of emission of the interrogation in recurrence i and in recurrence j.

**2.** Method according to Claim 1 in which a distance tolerance is used to perform the synchronism test.

**3.** Method of defruiting in which defruiting methods according to Claim 1 are applied in parallel to different radial speed bins [ Vmin; Vmax ].

**4.** Method according to Claim 3 in which the radial speed bins are contiguous.

**5.** Method according to Claim 3 in which the radial speed bins are equidistributed.

6. Method according to Claim 1 in which the synchronism test is performed in the far field only on the recurrences for which the interrogation azimuth lies in the effective interrogation lobe of the secondary radar.

7. Defruiter for extractor of transponder responses comprising a correlation device configured to implement the method according to Claim 1.

8. Secondary radar comprising a defruiter according to Claim 7.

**Patentansprüche**

1. Verfahren zur Unterdrückung nichtsynchroner Falschantworten (Fruit) der Antworten von Transpondern, die von einem Sekundärradar als Antwort auf rekurrent vom Radar emittierte Abfragen empfangen werden, wobei eine Rekurrenz aus der Abfrage und den während einer auf die Abfrage folgenden Abhörperiode empfangenen Antworten gebildet wird, wobei das Verfahren zur Unterdrückung nichtsynchroner Falschantworten einen Synchronismustest der in verschiedenen Rekurrenzen empfangenen Antworten enthält, **dadurch gekennzeichnet, dass** eine erste in einer Rekurrenz i empfangene Antwort als mit einer in einer anderen Rekurrenz j empfangenen zweiten Antwort synchron angesehen wird, wenn:

$$\rho_j \in \lfloor \rho_i - V_{max} \times (t_j - t_i) ; \rho_i - V_{min} \times (t_j - t_i) \rfloor \quad \text{wenn gilt} \quad t_j > t_i,$$

oder

$$\rho_j \in \lfloor \rho_i - V_{min} \times (t_j - t_i) ; \rho_i - V_{max} \times (t_j - t_i) \rfloor \text{ wenn gilt } t_j < t_i$$

wobei:

- $V_{min}$ und $V_{max}$ die minimale bzw. maximale radiale Geschwindigkeit der Transponder bezüglich des Sekundärradars sind, üblicherweise positiv für einen Transponder, der sich dem Radar nähert, wobei die Geschwindigkeiten $V_{min}$ und $V_{max}$ gleich sein können, wobei mindestens $V_{min}$ oder $V_{max}$ ungleich Null ist;
- $\rho_i$ und $\rho_j$ der Abstand sind, in dem der Transponder in der Rekurrenz i bzw. in der Rekurrenz j erfasst wurde;
- $t_i$ und $t_j$ der Emissionszeitpunkt der Abfrage in der Rekurrenz i bzw. in der Rekurrenz j sind.

2. Verfahren nach Anspruch 1, bei dem eine Abstandstoleranz verwendet wird, um den Synchronismustest durchzuführen.

3. Verfahren zur Unterdrückung nichtsynchroner Falschantworten, bei dem parallel Verfahren zur Unterdrückung nichtsynchroner Falschantworten nach Anspruch 1 in unterschiedlichen radialen Geschwindigkeitsbereichen [Vmin; Vmax] angewendet werden.

4. Verfahren nach Anspruch 3, bei dem die radialen Geschwindigkeitsbereiche aneinander grenzen.

5. Verfahren nach Anspruch 3, bei dem die radialen Geschwindigkeitsbereiche gleich verteilt sind.

6. Verfahren nach Anspruch 1, bei dem der Synchronismustest im fernen Feld nur bei den Rekurrenzen durchgeführt wird, bei denen das Abfrage-Azimut in der wirksamen Abfragekeule des Sekundärradars enthalten ist.

7. Defruiter für einen Extraktor von Transponder-Antworten, der eine Korrelationsvorrichtung aufweist, die konfiguriert ist, um das Verfahren nach Anspruch 1 anzuwenden.

8. Sekundärradar, der einen Defruiter nach Anspruch 7 aufweist.

Fig. 1

LOG Σ →

Δ/Σ →

QΣ →

QRSLS →

Traitement des impulsions — 10

Génération des messages réponses — 20

Mémorisation des messages réponses — 30

Élimination des fruits — 40

Génération des plots — 50

Détection des réponses secondaires — 60

Mémorisation des détections — 70

Corrélation des détections — 80

Fig. 2

EP 1 671 152 B1

Fig. 3

Fig. 4

EP 1 671 152 B1

## Fig. 5

## Fig. 6

EP 1 671 152 B1

Fig. 7

Fig. 8

Fig. 9

Fig. 10

Fig. 12

Fig. 14

Fig. 11

Fig. 13

Fig. 15

EP 1 671 152 B1

Fig. 16

EP 1 671 152 B1

**EP 1 671 152 B1**

## RÉFÉRENCES CITÉES DANS LA DESCRIPTION

**Documents brevets cités dans la description**

- FR 2692996